(19) Europäisches Patentamt
European Patent Office
Office européen des brevets

(11) Publication number: **0 391 992 B1**

(12) # EUROPEAN PATENT SPECIFICATION

(45) Date of publication of patent specification: **29.06.94**

(51) Int. Cl.5: **G03C 8/28**, C01G 53/11

(21) Application number: **89909805.7**

(22) Date of filing: **16.08.89**

(86) International application number:
**PCT/GB89/00954**

(87) International publication number:
**WO 90/02360 (08.03.90 90/06)**

(54) **STABILISED SILVER DEVELOPMENT NUCLEI AND DIFFUSION TRANSFER RECEIVING SHEETS.**

(30) Priority: **18.08.88 GB 8819646**

(43) Date of publication of application:
**17.10.90 Bulletin 90/42**

(45) Publication of the grant of the patent:
**29.06.94 Bulletin 94/26**

(84) Designated Contracting States:
**DE FR GB IT NL**

(56) References cited:

| | |
|---|---|
| DE-A- 1 906 296 | DE-A- 2 134 979 |
| FR-A- 2 065 919 | FR-A- 2 117 403 |
| FR-A- 2 184 794 | GB-A- 863 516 |
| GB-A- 998 955 | US-A- 3 406 064 |

(73) Proprietor: **KODAK LIMITED**
**P.O. Box 66**
**Station Road**
**Hemel Hempstead Herts, HP1 1JU(GB)**
(84) Designated Contracting States:
**GB**

(73) Proprietor: **EASTMAN KODAK COMPANY**
**343 State Street**
**Rochester New York 14650-2201(US)**
(84) Designated Contracting States:
**DE FR IT NL**

(72) Inventor: **UZZELL, Gareth, David**
**Blackmore Mill House**
**Hay Green Lane**
**Brentwood**
**Essex(GB)**

(74) Representative: **Baron, Paul Alexander Clifford**
**Kodak Limited**
**Patent Department**
**Headstone Drive**
**Harrow Middlesex HA1 4TY (GB)**

**EP 0 391 992 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to photography and, in particular, to silver precipitation nuclei compositions and receiving sheets for the silver salt diffusion transfer process.

In the silver salt diffusion transfer process an imagewise exposed photosensitive silver halide material is placed in contact with a receiving layer in the presence of a developing agent and an alkaline processing composition containing a silver halide solvent. Development occurs imagewise while the silver halide solvent brings silver ions into solution in the undeveloped areas. The silver ions migrate to the receiving layer and these in the presence of development nuclei, undergo a process of physical development thus producing a silver image in the receiving layer complementary to that formed in the silver halide layer. In one form of the process, the exposed silver halide material is placed in face-to-face contact with a separate receiving sheet in the presence of a viscous processing solution. After processing the "sandwich" is peeled apart leaving the receiving sheet bearing the desired image. The silver precipitation nuclei are commonly formed from colloidal suspensions of certain metals or metal sulphides. The present invention is primarily concerned with nickel sulphide nuclei.

Receiver sheets are currently prepared by a process in which an aqueous composition containing nickel sulphide silver precipitation nuclei is coated onto a support and dried. It has been observed that the longer this composition is held prior to coating, the more the properties of the finished receiving layer deteriorate, e.g. the maximum image density obtainable becomes less.

It has now been found that suspensions of nickel sulphide nuclei can be stabilised by the addition of a reducing agent. Reducing agents are, of course, widely used in photography. Examples of such uses are as silver halide developing agents, as developer solution preservatives preventing premature oxidation by atmospheric oxgen, as electron transfer agents and interlayer scavengers. For example, US Patents 3,765,889, 4,514,488 and 4,585,725 all describe processing solutions for the silver salt diffusion process which may contain hydroxylamine compounds. It is to be noted that such compounds only come into contact with the development nuclei during processing and after imagewise exposure of the silver halide layer and certainly not during the coating of the layer containing the nuclei as do the reducing agents employed in the present invention.

According to the present invention there is provided an aqueous composition comprising a colloidal suspension of nickel sulphide particles and a stability-improving amount of a reducing agent comprising sodium or potassium sulphite or a hydroxylamine compound or combination thereof.

In one embodiment the reducing agent is a hydroxylamine compound of the formula:

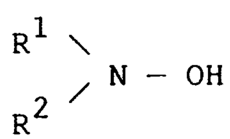 (I)

wherein $R^1$ and $R^2$ are each independently hydrogen or an alkyl, alkoxyalkyl or alkoxyalkoxy group, or an acid salt thereof. Alternatively, combinations of such reducing agents may be used.

The groups $R^1$ and $R^2$ when not hydrogen preferably contain 1-4 carbon atoms. Examples of groups which may be represented are methyl, ethyl, propyl, methoxyethyl, ethoxyethyl, methoxyethoxy and ethoxyethoxy. The acid salts may be sulphates, chlorides, thiocyanates or toluene sulphates.

The reducing agents may be water-soluble or insoluble and coated with the nuclei in solution or dispertion respectively.

Examples of particularly preferred hydroxylamines of formula (I) include hydroxylamine sulphate and diethyl-hydroxylamine.

The amount of reducing agent to be used may be optimised by experiment (as is shown in the Examples below) but, as a guide, a coverage in the range 0.5 to 1000 mg/$m^2$ may be used. Hydroxylamine sulphate is preferably used at a coverage of from 20 to 350 mg/$m^2$, while sulphite ions are preferably used at 1 to 7 mg/$m^2$ and diethylhydroxylamine at 30 to 650 mg/$m^2$. The nuclei themselves will usually be coated, at a coverage in the range 1.5 to 3 mg/$m^2$ (as NiS).

The following Examples are included for a better understanding of the invention.

EXAMPLE 1

Nickel sulphide nuclei are formed by precipitation in a 12% (w/w) solution of gelatin from sodium sulphide (75g/l) and nickel nitrate (35g/l). The dispersion is then stabilised by the addition of silver iodide and other solutions made to provide a coating composition having the formula:

| | | |
|---|---|---|
| Gelatin | 40 | gram |
| Nickel Sulphide | 0.063 | |
| Silver iodide | 0.06 | |
| 5-phenyl-2-mercaptoxadiazole | 0.17 | |
| 5-methylbenztriazole | 0.044 | |
| Water to | 1 | litre |

This composition was divided into four 250ml portions and placed in polystyrene containers. Hydroxylamine sulphate (HAS) was added to the melt in accordance with Table 1 below. The suspensions were stirred magnetically for 5 minutes to fully dissolve and mix the HAS. The containers were sealed and stored at 4°C.

TABLE 1

| Experiment No. | HAS g/l |
|---|---|
| 1 | 0.0 |
| 2 | 0.5 |
| 3 | 1.0 |
| 4 | 2.0 |

The properties of the nickel sulphide colloidal suspensions were measured soon after making and then at varying time intervals over a period of approximately 3 weeks as described below.

The following solutions were used:

Solution A - nickel sulphide colloidal suspension as described above at 40°C.

Solution B - 1:1 mixture of Kodak PMT II activator and 0.01M Silver nitrate at 20°C.

All readings were carried out at wavelength of 660nm.

The rate of development of the nuclei was measured by injecting equal volumes of solutions A and B into the cell of a spectrophotometer, which was at a temperature of 40°C. The rate of change of absorbance with respect to time was recorded and from this the rate and Dmax were calculated.

Rate was taken as the gradient of the steepest part of the curve. Dmax was the distance measured (cm) between maximum and minimum absorbance.

For relative optical density (O.D.) measurements the spectrophotometer was set to zero with a 1cm cell containing distilled water in the reference beam. A 1cm cell containing solution A was then placed in the sample beam and the absorbance reading taken. The results are shown in Table 2.

TABLE 2

| Experiment No. | Preparation | Rate | Dmax | O.D. |
|---|---|---|---|---|
| 1 | initial (day 1) | 1.98 | 9.0 | 0.201 |
| 2 | initial (day 1) | 2.09 | 11.6 | 0.199 |
| 3 | initial (day 1) | 2.06 | 12.1 | 0.203 |
| 4 | initial (day 1) | 2.00 | 11.7 | 0.204 |
| 1 | final (day 22) | 0.41 | 5.2 | 0.223 |
| 2 | final (day 22) | 1.83 | 16.2 | 0.192 |
| 3 | final (day 22) | 1.89 | 15.6 | 0.190 |
| 4 | final (day 22) | 1.57 | 15.9 | 0.204 |

In order to assess the stability of the solutions, a decomposition value is calculated.

$$\text{Decomp.} = \frac{\text{initial rate (Ri)}}{\text{final rate (Rf)}}$$

The calculated rates are shown in Table 3.

TABLE 3

| Experiment No. | Decomp. |
|---|---|
| 1 | 4.88 |
| 2 | 1.14 |
| 3 | 1.09 |
| 4 | 1.27 |

The higher the decomp. value the lower the stability. Thus, it can be seen that addition of HAS considerably increases the stability of the solutions. An improvement in the initial and final Dmax was also noted with solutions containing HAS.

EXAMPLE 2

Two layer coatings in which the nuclei dispersion contained three different reducing agents at varying concentrations on both transparent and opaque supports were made using coating solutions as follows:

Nuclei : 3.2 ml/ft$^2$ nickel sulphide colloidal suspension + 3.6 ml/L 20% formaldehyde

Supercoat : 8% gelatin at 1.08 ml/ft$^2$ + 2% TRITON X 100 (a non-ionic surfactant)

Test images were formed in the fresh and incubated receiving sheets (incubated at 4°C for 30 days). Measurements were made of resolution (width of resolvable lines in $\mu$m) and density. The results are shown in Table 4 in which R-Res and T-Res mean reflection and transmission resolution and R-Den and T-Den similarly refer to density.

It is believed that R-Den can be taken as a measure of the speed of silver transfer while T-Den is taken as a measure of quantity of silver transferred. These factors must be considered in conjunctin with measurements of resolution which are indicative of image quality.

TABLE 4

| REDUCING AGENT | CONC.mg/$m^2$ | AGE | R-Res | T-Res | R-Den | T-Den |
|---|---|---|---|---|---|---|
| Control | None | Fresh<br>30 Days | 25<br>25 | 12<br>15 | 1.57<br>1.57 | 3.75<br>4.05 |
| HAS | 69.0 | Fresh<br>30 Days | 30<br>30 | 15<br>20 | 1.59<br>1.55 | 4.36<br>4.55 |
| Sulphite | 95.6 | Fresh<br>30 Days | 30<br>25 | 12<br>15 | 1.49<br>1.59 | 3.99<br>4.43 |
| DHA* | 276.0 | Fresh<br>30 Days | 25<br>25 | 12<br>15 | 1.63<br>1.56 | 3.65<br>4.62 |

*DHA is Diethylhydroxylamine

The results show that improvements (compared to the control) are seen in R-Den or T-Den or both without unduly affecting image quality as indicated by resolution.

## EXAMPLE 3

The procedure of Example 2 was repeated but with a 180 day incubation period. The results are shown in Table 5.

TABLE 5

| REDUCING AGENT | CONC. mg/$m^2$ | AGE | R-RES | T-RES | R-DEN | T-DEN |
|---|---|---|---|---|---|---|
| Control | None | Fresh<br>180 d | 20<br>25 | 12<br>12 | 1.36<br>1.43 | 4.02<br>3.10 |
| HAS | 34.5 | Fresh<br>180 d | 25<br>25 | 15<br>12 | 1.37<br>1.45 | 4.06<br>3.40 |
| HAS | 69.0 | Fresh<br>180 d | 25<br>25 | 15<br>15 | 1.35<br>1.46 | 4.26<br>3.28 |

As in Example 2, improvements are seen in R-Den and/or T-Den without unduly affecting image quality.

## Claims

**1.** An aqueous composition comprising a colloidal suspension of nickel sulphide particles and a stability-improving amount of a reducing agent comprising sodium or potassium sulphite or a hydroxylamine compound or combination thereof.

**2.** A composition as claimed in claim 1 in which the reducing agent is a hydroxylamine compound of the formula:

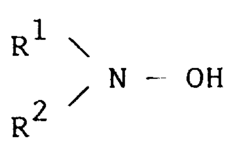

(I)

wherein $R_1$ and $R_2$ are each independently hydrogen or an alkyl, alkoxyalkyl or alkoxyalkoxy group, or an acid salt thereof.

3. A composition as claimed in Claim 2 in which the hydroxylamine compound is hydroxylamine sulphate or diethyl-hydroxylamine.

4. A silver salt diffusion transfer receiving sheet having a receiving layer formed from a dispersion comprising a composition as claimed in any of claims 1-3.

5. A receiving sheet as claimed claim 4 in which the reducing agent is present at a coverage of 0.5 to 1,000 mg/$m^2$.

6. A receiving sheet as claimed in claim 4 in which the reducing agent is a sulphite present at a coverage of 1-7 mg/$m^2$ (as sulphite ions).

7. A receiving sheet as claimed in claim 4 in which the reducing agent is hydroxylamine sulphate present at a coverage of 20-350 mg/$m^2$.

8. A receiving sheet as claimed in claim 4 in which the reducing agent is diethylhydroxylamine at a coverage of 30-650 mg/$m^2$.

**Patentansprüche**

1. Wäßrige Zusammensetzung mit einer kolloidalen Suspension von Nickelsulfidteilchen und einer die Stabilität verbessernden Menge eines Reduktionsmittels, das umfaßt Natrium- oder Kaliumsulfit oder eine Hydroxylaminverbindung oder eine Kombination hiervon.

2. Zusammensetzung nach Anspruch 1, in der das Reduktionsmittel eine Hydroxylaminverbindung der folgenden Formel ist:

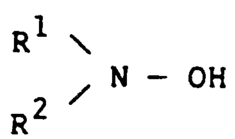

(I)

worin $R^1$ und $R^2$ jeweils unabhängig voneinander stehen für Wasserstoff oder eine Alkyl-, Alkoxyalkyl- oder Alkoxyalkoxygruppe oder ein Säuresalz hiervon.

3. Zusammensetzung nach Anspruch 2, in der die Hydroxylaminverbindung aus Hydroxylaminsulfat oder Diethylhydroxylamin besteht.

4. Empfangsblatt für die Silbersalz-Diffusionsübertragung mit einer Empfangsschicht, die gebildet wurde aus einer Dispersion mit einer Zusammensetzung gemäß einem der Ansprüche 1 - 3.

5. Empfangsblatt nach Anspruch 4, in dem das Reduktionsmittel in einer Beschichtungsstärke von 0,5 - 1000 mg/$m^2$ vorliegt.

6. Empfangsblatt nach Anspruch 4, in dem das Reduktionsmittel ein Sulfit ist, das in einer Beschichtungsstärke von 1 - 7 mg/$m^2$ (in Form von Sulfitionen) vorliegt.

7. Empfangsblatt nach Anspruch 4, in dem das Reduktionsmittel Hydroxylaminsulfat ist, das in einer Beschichtungsstärke von 20 - 350 mg/$m^2$ vorliegt.

8. Empfangsblatt nach Anspruch 4, in dem das Reduktionsmittel Diethylhydroxylamin ist, das in einer Beschichtungsstärke von 30 - 650 mg/$m^2$ vorliegt.

**Revendications**

1. Composition aqueuse comprenant une suspension colloïdale de particules de sulfure de nickel et une quantité pour améliorer la stabilité d'un agent réducteur comprenant du sulfite de sodium ou de

potassium et un composé d'hydroxylamine ou une combinaison de ces derniers.

**2.** Composition selon la revendication 1 dans lequel l'agent réducteur est un composé d'hydroxylamine de formule :

$$\begin{matrix} R^1 \backslash & & \\ & N - OH & \\ R^2 / & & \end{matrix} \qquad (I)$$

où $R_1$ et $R_2$ sont chacun séparément l'hydrogène ou un groupe alkyle, alkoxyalkyle ou alkoxyalkoxy, ou un sel acide de ce composé.

**3.** Composition selon la revendication 2 dans laquelle le composé d'hydroxylamine est le sulfate d'hydroxylamine ou la diéthyl hydroxylamine.

**4.** Feuille réceptrice pour diffusion transfert à base de sel d'argent comprenant une couche réceptrice formée à partir d'une dispersion comprenant une composition telle que revendiquée dans l'une quelconque des revendications 1 à 3.

**5.** Feuille réceptrice telle que revendiquée dans la revendication 4 dans laquelle l'agent réducteur et présent à un titre de 0,5 à 1 000 $mg/m^2$.

**6.** Feuille réceptrice selon la revendication 4 dans laquelle l'agent réducteur est un sulfite présent à un titre de 1 à 7 $mg/m^2$ (en ions sulfite).

**7.** Feuille réceptrice selon la revendication 4 dans laquelle l'agent réducteur est le sulfate d'hydroxylamine présent à un titre de 20 à 350 $mg/m^2$.

**8.** Feuille réceptrice selon la revendication 4 dans laquelle l'agent réducteur est la diéthylhydroxylamine à un titre de 30 à 650 $mg/m^2$.